# EUROPÄISCHE PATENTSCHRIFT

(11) **EP 0 452 518 B1**
(45) Veröffentlichungstag und Bekanntmachung des Hinweises auf die Patenterteilung: **02.06.1993**
(21) Anmeldenummer: 90105459.3
(22) Anmeldetag: 22.03.1990
(51) Int. Cl.: B60H 1/00, F04D 25/08, H02K 9/06

(54) **Kühlsystem, insbesondere zur Verwendung in einem Kraftfahrzeug, mit einem durch einen Elektromotor angetriebenen Axiallüfterrad**
Cooling system comprising an axial fan driven by an electric motor, particularly for use in a motor vehicle
Système de refroidissement comprenant un ventilateur axial entraîné par un moteur électrique, utilisé en particulier dans un véhicule automobile

(43) Veröffentlichungstag der Anmeldung: 23.10.1991
(73) Patentinhaber: SIEMENS AKTIENGESELLSCHAFT, 80333 München (DE)
(72) Erfinder: Röchner, Burkard, Dipl.-Ing., D-8700 Würzburg (DE); Pieczkowski, Peter, Dipl.-Ing. (FH), D-8700 Würzburg (DE)

(56) Entgegenhaltungen:
- EP-A- 0 070 423
- FR-A- 2 433 846
- GB-A- 2 160 924
- US-A- 4 210 833

## Beschreibung

Die Erfindung bezieht sich auf ein Kühlsystem, insbesondere zur Verwendung in einem Kraftfahrzeug, mit einem durch einen Elektromotor angetriebenen Axiallüfterrad, gemäß Oberbegriff des Anspruchs 1; ein derartiges Kühlsystem ist aus der US-A-4 210 833 bekannt.

Bei dem durch die US-A-4 210 833 bekannten Kühlsystem mit einer das Gehäuse des Elektromotors an seinem dem Wärmetauscher zugewandten Ende übergreifenden Nabe zur Befestigung des Axiallüfterrades auf einem Rotorwellenende, wird durch einen durch die Axiallüfterradnabe und einen am Elektromotor-Außen-Umfang gehaltenen Wandteil gebildeten Neben-Luftstromkanal mittels darin angebrachte Zusatz-Lüfterschaufeln eingangsseitig ein Luftstrom aus dem Elektromotor gesaugt und ausgangsseitig zur Ansaugseite des Axiallüfterrades gefördert.

Bei einem durch die DE-Al-33 01 918 bekannten Kühlersystem wird die Kühlluft für den antreibenden Elektromotor auf der dem Axialventilatorrad abgewandten Seite des Elektromotors durch eine schlauchförmige Zuleitung in eine über das motorgehäuse gestülpte Kappe angesaugt, tritt durch an diesem Motorende in den Lagerschilden vorgesehene Öffnungen in den Motorinnenraum ein und durch Öffnungen an dem anderen Lagerschild des Motors wieder aus.

Ein gegenüber dem erstgenannten Kühlsystem mit geringerem konstruktiven und fertigungstechnischen Aufwand bzw. dem zweitgenannten bekannten Kühlsystem mit höherem Wirkungsgrad arbeitendes Kühlsystem kann erfindungsgemäß durch die Lehre des Anspruchs 1 erreicht werden; bei dem erfindungsgemäßen Kühlsystem wird in vorteilhafter Weise der über den Neben-Luftstromkanal fließende, den Motor kühlende Luftstrom einerseits durch ein vor dem Axiallüfterrad anstehenden Staudruck, z.B. bei höherer Geschwindigkeit des Fahrzeuges, erhöht und andererseits der durch den Neben-Luftstromkanal strömende, für die Kühlung des Elektromotors vorgesehene Luftstrom nicht bereits durch den Wärmetauscher vorgewärmt; vielmehr kann dieser Luftstrom nach dem Austritt aus dem Motor dem Nutz-Luftstrom zum Wärmetauscher direkt zugeführt werden.

In konstruktiv und fertigungstechnisch besonders einfacher Weise ist nach einer Ausgestaltung der Erfindung bei einem Axiallüfterrad mit einer das zugewandte Ende des Elektromotors umgreifenden Nabe vorgesehen, daß der Neben-Luftstromkanal eingangsseitig durch den Elektromotor, insbesondere den äußeren Umfang seines Statorgehäuses einerseits, und die axial in radialem Abstand übergreifende Nabe des Axiallüfterrades andererseits gebildet ist.

Die Erfindung sowie weitere vorteilhafte Ausgestaltungen der Erfindung werden im folgenden anhand dreier schematisch dargestellter Ausführungsbeispiele in der Zeichnung näher erläutert; darin zeigen jeweils in einem axialen, mehr oder weniger teilweisen Schnitt
- FIG 1: ein Kühlsystem mit einem aus einem gesonderten Rohrstück gebildeten Verbindungskanal zwischen dem abströmseitigen Ende des Elektromotors und dem Wärmetauscher,
- FIG 2: einen als einstückiger Teil des Statorgehäuses des Elektromotors ausgebildeten Verbindungskanal zwischen dem abströmseitigen Ende des Elektromotors und dem Wärmetauscher,
- FIG 3: einen gleichzeitig als Haltering für den Elektromotor ausgebildeten Verbindungskanal zwischen dem abströmseitigen Ende des Elektromotors und dem Wärmetauscher.

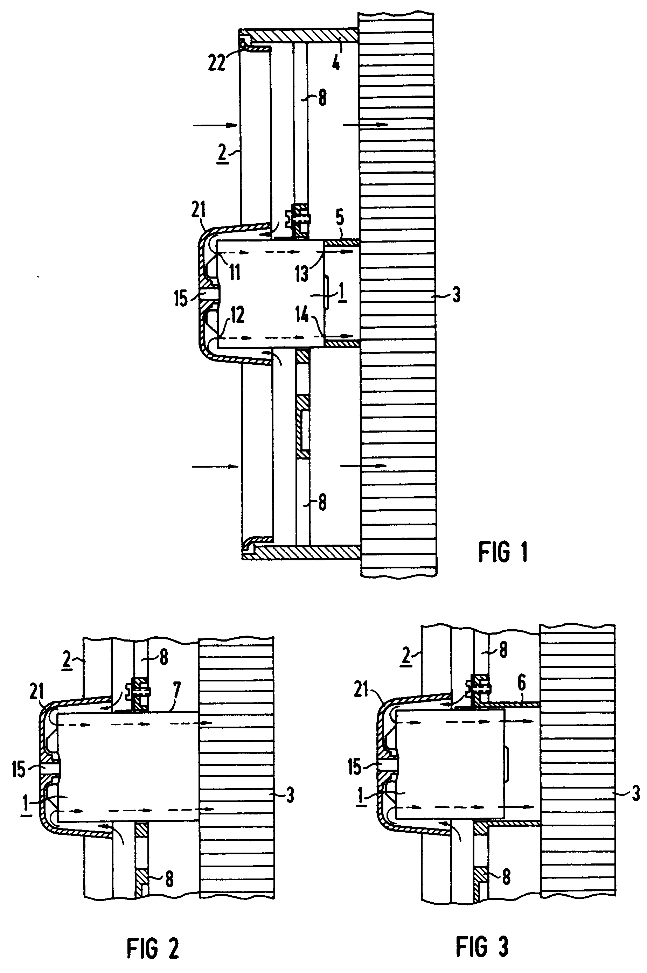

FIG 1 zeigt einen Kraftfahrzeug-Kühlerventilator mit von einem Elektromotor 1 angetriebenen, druckseitig vor einem Wärmetauscher 3 über Haltestreben 8 in einer feststehenden Leitvorrichtung 4 rotierenden Axialventilator 2 mit einem die Ventilatorschaufeln außen umgebenden rotierenden Leitring 22. Aus dem Druckraum hinter dem Axialventilator 2 und vor dem Wärmetauscher 3 ist ein mit Strömungspfeilen angedeuteter Nebenluftstromkanal abgezweigt, der sich zunächst zwischen dem Außenumfang des Elektromotors 1 und der das anströmseitige Ende des Elektromotors 1 übergreifenden, auf dem Rotorwellenende 15 befestigten Nabe 21 des Axiallüfterrads 2 erstreckt, dann durch Öffnungen 11; 12 des anströmseitigen Lagerschildes des Elektromotors 1 in das Innere des Elektromotors 1 eintritt, diesen durchströmt, aus Lüftungsöffnungen 13, 14 im abströmseitigen Lagerschild des Elektromotors 1 austritt und dann durch einen gegenüber dem Stauraum zwischen dem Axiallüfterrad 2 und dem Wärmetauscher 3 in Form eines Rohrstückes 5 abgesperrten Verbindungskanal zum Wärmetauscher 3 geführt ist, den er anschließend, u.U. nach der Aufnahme von weiterer Wärme, durchströmt, um sich hinter dem Wärmetauscher 3 mit dessen Hauptkühlluftstrom zu vermischen.

Anstelle eines Durchströmens des Elektromotors kann auch ein Neben-Luftstromkanal über den Außenumfang des Statorfehäuses des Elektromotors mit dann entsprechend radial erweitertem anschließenden Verbindungskanal vorgesehen werden.

FIG 2 zeigt in noch weiterer fertigungstechnischer Vereinfachung den Verbindungskanal als einstückigen Bestandteil des Statorgehäuses des Elektromotors 1.

FIG 3 zeigt als konstruktive Alternative zum Verbindungskanal in Form eines Rohrstücks gemäß FIG 1 einen Verbindungskanal in Form eines den Elektromotor 1 gleichzeitig aufnehmenden Halterings 6, in dem der Elektromotor eingesteckt und dann über Haltewinkel des Halterings 6 an den Streben 8 befestigt ist.

## Patentansprüche

1. Kühlsystem, insbesondere zur Verwendung in einem Kraftfahrzeug, mit einem durch einen Elektromotor (1) angetriebenen Axiallüfterrad (2) axial druckseitig vor einem Wärmetauscher (3) sowie einem durch den Elektromotor und einen anschließenden, gegenüber dem Druckraum abgetrennten Verbindungskanal (5 bzw. 6 bzw. 7) führenden Neben-Luftstromkanal, **gekennzeichnet durch** einen aus dem Druckraum zwischen dem Axiallüfterrad (2) und dem Wärmetauscher (3) abzweigenden Neben-Luftstromkanal.

2. Kühlsystem nach Anspruch 1, **dadurch gekennzeichnet,** daß bei einem Elektromotor (1) mit einer sein Gehäuse an seinem dem Wärmetauscher (3) abgewandten Ende umgreifenden Nabe (21) zur Befestigung des Axiallüfterrads (2) auf einem Rotorwellenende (15) der Neben-Luftstromkanal eingangsseitig durch den Elektromotor (1) einerseits und die axial in radialem Abstand übergreifende Nabe (21) des Axiallüfterrads (2) andererseits gebildet ist.

3. Kühlsystem nach Anspruch 1 und/oder 2, **dadurch gekennzeichnet,** daß der Verbindungskanal durch ein axial zwischen der Abströmseite des Elektromotors (1) und der Anströmseite des Wärmetauschers (3) angeordnetes Rohrstück (5) gebildet ist (FIG 1).

4. Kühlsystem nach Anspruch 3, **dadurch gekennzeichnet,** daß der Verbindungskanal als einstückiges Teil (7) des Statorgehäuses des Elektromotors (1) ausgebildet und das Statorgehäuse eingangs- und ausgangsseitig mit Eintritts- bzw, Austrittsöffnungen (11; 12 bzw, 13; 14) für den Kühl-Luftstromkanal versehen ist (FIG 2).

5. Kühlluftanordnung nach Anspruch 1 und/oder 2, **dadurch gekennzeichnet,** daß der Verbindungskanal durch einen gleichzeitig an seinem einen Ende den Elektromotor (1) aufnehmenden Haltering (6) gebildet ist (FIG 3).

## Claims

1. Cooling system, in particular for use in a motor vehicle, having an axial fan wheel (2) axially on the pressure side in front of a heat exchanger (3) and driven by an electric motor (1), and a secondary air flow duct running through the electric motor and a subsequent connecting duct (5 and 6 and 7, respectively) separated from the pressure space, characterised by a secondary air flow duct branching off from the pressure space between the axial fan wheel (2) and the heat exchanger (3).

2. Cooling system according to claim 1, characterised in that, with an electric motor (1) having a hub (21) surrounding the housing of the said motor at its end facing away from the heat exchanger (3), which hub is for securing the axial fan wheel (2) to a rotor shaft end (15), the secondary air flow duct is formed on the inlet side by the electric motor (1) on the one hand and by the hub (21) of the axial fan wheel (2) on the other hand, with the said hub overlapping axially at a radial distance.

3. Cooling system according to claim 1 and/or 2, characterised in that the connecting duct is formed by a piece of pipe (5) arranged axially between the flow-off side of the electric motor (1) and the approach flow side of the heat exchanger (3) (Figure 1).

4. Cooling system according to claim 3, characterised in that the connecting duct is constructed as an integral part (7) of the stator housing of the electric motor (1), and the stator housing is provided on the entrance side and on the exit side with inlet openings and outlet openings (11; 12 and 13; 14 respectively) for the cooling air flow duct (Figure 2).

5. Cooling air arrangement according to claim 1 and/or 2, characterised in that the connecting duct is formed by a retaining ring (6) receiving the electric motor (1) at the same time at one end thereof (Figure 3).

## Revendications

1. Système de refroidissement destiné notamment à être utilisé dans un véhicule automobile, comportant une roue de ventilateur axial (2) entraînée par un moteur électrique (1) et disposée axialement sur le côté refoulement en amont d'un échangeur de chaleur (3), ainsi qu'un canal de courant d'air auxiliaire qui passe par le moteur électrique et un canal de liaison contigu (5 ou 6 ou 7), qui est séparé de l'espace sous pression, caractérisé par un canal de courant d'air auxiliaire qui s'étend en dérivation à partir de l'espace sous pression entre la roue (2) du ventilateur axial et l'échangeur de chaleur (3).

2. Système de refroidissement suivant la revendication 1, caractérisé par le fait que, dans un moteur électrique (1) comportant un moyeu (21) s'engageant autour de son carter au niveau de son extrémité tournée à l'opposé de l'échangeur de chaleur (3) pour la fixation de la roue (2) du ventilateur axial sur une extrémité (15) de l'arbre du rotor, le canal de courant d'air auxiliaire est formé, côté entrée, par le moteur électrique (1), d'une part, et par le moyeu (21), qui réalise un enveloppement axial à une certaine distance radiale, de la roue (2) du rotor axial, d'autre part.

3. Système de refroidissement suivant la revendication 1 et/ou 2, caractérisé par le fait que le canal de liaison est formé par un élément tubulaire (5) disposé axialement entre le côté du moteur électrique (1), sur lequel s'évacue le courant d'air, et le côté de l'échangeur de chaleur (3), sur lequel arrive le courant d'air (figure 1).

4. Système de refroidissement suivant la revendication 3, caractérisé par le fait que le canal de liaison est agencé sous la forme d'une partie monobloc (7) du carter du stator du moteur électrique (1) et que le carter du stator est pourvu, côté entrée et côté sortie, d'ouvertures d'entrée et de sortie (11; 12 et 13; 14) pour le canal de courant d'air de refroidissement (figure 2).

5. Dispositif de refroidissement suivant la revendication 1 et/ou 2, caractérisé par le fait que le canal de liaison est formé par une bague de retenue (6), qui loge en même temps, au niveau de l'une de ses extrémités, le moteur électrique (1) (figure 3).
